Europäisches Patentamt

(19) European Patent Office

Office européen des brevets

(11) Publication number: **0 435 789 A2**

# (12) EUROPEAN PATENT APPLICATION

(21) Application number: **90420563.0**

(22) Date of filing: **21.12.90**

(51) Int. Cl.$^5$: **C09J 123/04, C09J 123/20**

(30) Priority: **28.12.89 US 458489**

(43) Date of publication of application:
**03.07.91 Bulletin 91/27**

(84) Designated Contracting States:
**AT BE CH DE DK ES FR GB GR IT LI LU NL SE**

(71) Applicant: **AMERICAN NATIONAL CAN COMPANY**
**8770 West Bryn Mawr Avenue**
**Chicago, illinois 60631 (US)**

(72) Inventor: **Gustafson, Grant A.**
**1811 Lake Shore Drive**
**Menasha, WI 54952 (US)**
Inventor: **Johnson, Richard E., Jr.**
**202 Royal Court, Apt. 6**
**Appleton, WI 54915 (US)**

(74) Representative: **Jacquet, Michel et al**
**PECHINEY 28, rue de Bonnel**
**F-69433 Lyon Cédex 03 (FR)**

(54) Sealent blends for flexible packaging.

(57) Disclosed and claimed are sealant blends for flexible packaging and films and pouches comprised of the same, particularly, blends of: polyethylene-based polymers, ethylene-methyl acrylate copolymers and polybutylene, for peelable sealant blends; polyethylene-based polymers and polybutylene for peelable sealant-blends when very low temperature sealing is not required; ethylene-methyl acrylate copolymers and a polybutylene, for peelable-sealant blends when having excellent hot tack is unimportant; and polyethylene-based polymers and ethylene-methyl acrylate copolymers for non-peelable sealant blends which seal with good hot tack.

EP 0 435 789 A2

## SEALANT BLENDS FOR FLEXIBLE PACKAGING

This invention relates to sealant blends for flexible packaging, particularly blends of : polyethylene-based polymers, ethylene-methyl acrylate copolymers and polybutylene, for peelable sealant blends ; polyethylene-based polymers and polybutylene for peelable sealant blends when very low temperature sealing is not required ; ethylene-methyl acrylate copolymer and polybutylene, for peelable sealant blends when having excellent hot tack is unimportant ; and polyethylene-based polymers and methyl acrylate for non-peelable sealant blends which seal with good hot tack.

BACKGROUND OF INVENTION

Flexible packaging, such as films or pouches formed from films, usually require a sealant, for instance to form a film into a pouch or to seal the pouch closed after it has been filled. The sealant must provide a strong seal so that the packaging stays intact. However, the sealant should not have high static because dry contents of the packaging such as cereal will cling to the interior of the packaging. Further, if the packaging is to contain food, the sealant should not have an offensive odor such as an olefin odor.

E.I. Du Pont de Nemours & Co. (Du Pont) markets ionomer resins under the mark SURLYN. Surlyn blends as sealants tend to suffer from the disadvantages of high cost, high olefin odor and static.

It has been found that polybutylene blended with ethylene vinyl acetate or Surlyn as a sealant composition suffers from the disadvantage of high olefin odor.

It is believed that heretofore a sealant blend has not been taught or suggested which combines a good seal at low temperatures, low olefin odor, low static and low cost.

It is therefore an object of this invention to provide sealant blends having low seal activation temperatures, low static, low odor, low cost and good hot tack characteristics. These objects are achieved by blends containing one or more of the following polymers : polyethylene-based polymers, ethylene-methyl acrylate copolymers and polybutylene ; polyethylene-based polymers and polybutylene ; ethylene-methyl acrylate copolymers and polybutylene ; and polyethylene-based polymers and ethylene-methyl acrylate copolymers.

SUMMARY OF INVENTION

It has now been surprisingly found that a blend comprising polyethylene-based polymers, ethylene-methyl acrylate copolymers and polybutylene is a peelable sealant blend for flexible packaging which is very clean, i.e., it does not suffer from high olefin off-odors, has excellent hot tack, has low static properties and low cost, and provides a low seal activation temperature. It has also suprisingly been found that a blend comprising polyethylene-based polymers and a polybutylene is a peelable sealant blend which is useful when very low temperature sealing is not essential and still provides a seal with good hot tack, which also does not suffer from high olefin off-odors and which has low static properties and provides a strong seal.

Further, it has also been surprisingly discovered that a blend comprising ethylene-methyl acrylate copolymers and polybutylene is a peelable sealant blend which is useful when having excellent hot tack is unimportant, which does not suffer from high olefin off-odors and which has low static properties and provides a very low seal activation temperature. In addition, it has been surprisingly discovered that a blend comprising polyethylene-based polymers and ethylene-methyl acrylate copolymers is a sealant blend which is useful when peelability is unimportant and which has good hot tack, low static properties, provides a low seal activation temperature, and which does not suffer from high olefin off-odors.

Thus, the present invention provides a sealant blend comprising : polyethylene-based polymers, ethylene-methyl acrylate copolymers and polybutylene polymers ; or polyethylene-based polymers and polybutylene polymers ; or, ethylene-methyl acrylate copolymers and a polybutylene ; or, polyethylene-based polymers and ethylene-methyl acrylate copolymers.

The present invention also provides films made from and pouches sealed with such a sealant blend.

DETAILED DESCRIPTION

With respect to the sealant blend comprising polyethylene-based polymers, ethylene-methyl acrylate copolymers and polybutylene, the polyethylene-based polymer including ethylene $\alpha$ olefins (PE) can be present in an amount of from about 10 to about 90 wt%, preferably about 30 to about 70 wt%, and more preferably 45-55 wt%, the ethylene-methyl acrylate copolymers (EMA) can be present in an amount of from about 5 to about 75 wt%, preferably about 20 to about 50 wt% and more preferably from about 30 to about 40 wt%, and the polybutylene polymer (PB) can be present in an amount of from about 5 to about 35 wt%, preferably about 10 to about 25 wt% and more preferably about 10 to about 20 wt%.

With respect to the sealant blend comprising PE and PB, the PE can be present in an amount of from about 65 to about 95 wt%, and preferably about 75 to about 90 wt% and more preferably about 80 to about 90 wt%, and the PB can be present in an amount of from about 5 to about 35 wt%, preferably about 10 to about 25 wt% and more preferably about 10 to about 20 wt%.

Likewise, as to the sealant blend comprising EMA and PB, the EMA can be present in an amount of from about 65 to about 95 wt%, preferably about 75 to about 90 wt% and more preferably about 80 to about 90 wt%, and the PB can be present in an amount of from about 5 to about 35 wt%, preferably about 10 to about 25 wt% and more preferably about 10 to 20 wt%. This sealant may also contain about 0.5 to about 20 wt% PE, preferably about 5 to about 15 wt% PE to impart toughness. And, as to the sealant blend comprising PE and EMA, the PE can be present in an amount of from about 5 to 95 wt%, preferably about 30 to about 70 wt% and more preferably about 45 to about 55 wt% and the EMA can be present in an amount of from about 5 to about 95 wt%, preferably about 30 to 70 wt% and more preferably about 45 to 55 wt%. Blends of PE and EMA are generally non peelable but do exhibit the other characteristics of the invention.

In the blends of this invention containing PE, the PE preferably has a density of from about 0.87 to 0.93. Generally, as the density of the PE increases, the melting point of the PE increases. Therefore, as the density of the PE employed increases, the amount of other components employed in the blend will accordingly increase so as to maintain low seal activation temperatures. To aid those skilled in the art in understanding the relationship between the density of the PE employed and the amounts of the other components employed in the blend, when the density of the PE is about 0.88 to about 0.89, the amount of EMA required is negligible. In view of this relationship between the density of the PE employed and the amounts of other components in the blend, there is provided the embodiment comprising PE and PB ; and, the above-stated ranges for the embodiment comprising PB and EMA.

A preferred PE has a density of about 0.912. A preferred PE is an ethylene-octene copolymer commercially available from Dow Chemical Company as Dow Attane. Ultra low density polyethylene (ULDPE) is a particularly preferred PE. Another suitable commercially available PE is Mitsui's TAFMER, an ethylene α olefin, e.g., TAFMER A, an ethylene butene-1 copolymer having 90 mole percent ethylene and elastomer-like properties.

The sealant blends of the present invention can be cast as a film which can be a single layer film by itself or as an outer layer of a multi-layer film or laminate ; and, such a film or laminate (single or multilayer) can be formed into packages, e.g., pouches for liquid or dry fills or pouches for food, using conventional techniques. Conventional processes for forming films can be employed to form single or multilayer films containing a sealant blend of the present invention and include extrusion, coextrusion, extrusion coating, extrusion lamination, cast coextrusion, blown coextrusion, adhesive lamination, and the like and combinations thereof.

In multilayer films and laminates containing a sealant blend of the present invention as a layer, the other layers can be of almost any suitable material, e.g., vinylidene chloride copolymers such as vinylidene chloride vinyl chloride copolymers (VC, HB Sarans, Dow Chemical Co.), vinylidene chloride methyl acrylate copolymers (e.g., MA Saran, Dow 119, Dow Chemical Co.), or vinylidene chloride-methyl acrylate copolymers containing essentially no ethylene vinyl acetate, each of which are disclosed and/or claimed in the concurrently filed and commonly assigned applications of Blemberg et al. (Attorney Dockets 14840, 14807, 14849, PA 1040, PA 1007, PA 1021 and PA 1016) which are hereby incorporated herein by reference, polyethylene (PE), high density polyethylene (HDPE), low density polyethylene (LDPE), White LDPE, linear low density polyethylene (LLDPE), polypropylene (PP), nylon, ethylene vinyl acetate (EVA), or the like, or mixtures thereof. As to nylon, nylon 6 ; 11 ; 12 ; 6, 12 ; 66 ; and 6, 66 are suitable as are commercially available products such as ULTRAMIDKR 4600 (BASF), NOVAMID 2030 (Mitsubishi Chem. Co.), DURATHANE (Farbenfabriken Bayer, A.G.), "1030" (Unitika, Japan), ZYTEL SUPERTUFF 811 (Du Pont), "4018" (Huels, Germany), and ELY 1256 (Elmser, Switzerland).

In multilayer films and laminates having a film of a sealant blend of the present invention, a tie layer or adhesive may also be present between the layers. Suitable materials for such tie layers or adhesives are known to those skilled in the art and may include, by way of example, anhydride modified olefins or polyolefins such as maleic anhydride, EVA-based polymers, ethylene acrylic acid copolymers, partially hydrolized ethylene vinyl acetate copolymers, organic acid ester copolymer compositions, or other synthetic resinous materials. Presently, maleic anhydride and EVA-based polymers sold under the trademarks Admer, Plexar and Bynel are preferred as materials for ties.

Films made from the sealant blend of this invention (either single or multilayer) are the same thickness as conventional films, i.e., about 0.013 mm to about 0.127 mm with a preferred range of about 0.0254 to about 0.0762 mm. Coextrusions made with the blends of the present invention being present as a layer of about 0.0025 to about 0.0762 mm, preferably about 0.0063 to about 0.0254 mm. In applications such as rigid trays the thickness of the overall film can be substantially thicker.

Films and laminates having a sealant blend of the present invention (either single or multilayer, e.g., as an outer layer), can be formed into a finished package or "film-package", such as a pouch, e.g., a retort pouch an aseptic pouch or lid stock for a tray, by conventional methods, e.g., by sealing the periphery of the shape to be formed into a pouch. For instance, if a square pouch such as a retort pouch or aseptic pouch is desired, a rectangular film twice the desired length of the pouch is folded, the two parallel sides of the periphery (perpendicular to the fold) sealed, the food or other material to be packaged inserted therein, and then the remaining open side of the periphery is sealed. Another method for making a typical retort pouch is by sealing on three sides face-to-face films, filling the thus formed open pouch with food or whatever material is to be packaged therein, and then sealing the fourth side.

For background on pouches and their production, reference is made to U.S. Patent Nos. 4,190,477, 4,311,742, 4,360,550, and 4,424,256, each of which being hereby incorporated herein by reference.

For aseptic pouches the food is sterilized. The packaging is separately sterilized by the packaging machine usually in a bath of hydrogen peroxide. The sterile food and sterile film are brought together in a sterile environment to form an aseptic shelf stable package. No further processing is usually necessary for the aseptic package. Aseptic packaging is typically used for produce that are sensitive to high heat for extended periods of time. Such products include cheese, sauces, gravies, pudding, infant formula and milk based products.

Retort pouches are usually filled with food, although pouches having a sealant blend of the present invention may be a "film-package" for any material which can be contained therein ; and, the contents of such a pouch should not be considered as a limitation of this invention. Sealed retort pouches containing food are usually heated or retorted at temperatures and times sufficient to achieve commercial sterilization.

The cooking and the killing of bacteria can be achieved by heating or retorting the retort pouch containing food at a temperature, typically from about 100° C to 135° C for a sufficient time usually up to 1 hour.

The sealant blends of the present invention can additionally contain other materials which do not detract from or which even enhance the properties of the sealant blends. Such additional materials include slip. A typical slip is erucimide. Slip concentrate may be present in an amount of from about 0.5 to about 5 wt%, preferably about 3 wt%.

Of the sealant blends of this invention, the sealant blend of PE, EMA and PB is preferred. Within this broad recitation of sealant blend, the combination of EMA, ULDPE and PB is especially preferred. The EMA therein exhibits low seal activation temperature. The ULDPE therein exhibits excellent hot tack strength and low temperature sealability. And, the PB therein creates the peelability of the seal. This preferred combination has notable advantages over prior sealant blends. In addition, the economics are particularly favorable compared to Surlyn based sealants. The preferred sealant blend is very clean, i.e., it has low olefin off-odors, has excellent hot tack for vertical/form/fill/seal machines (see U.S.P. 4,190,477 and other pouch-related patents cited herein), and has low sealant activation temperature and low static properties which are desirable for dry mix and cereal packaging (so that the dry mix or cereal does not excessively cling to the packaging).

The following non-limiting examples are given by way of illustration only and are not to be considered limitations of this invention, many apparent variations of which are possible without departing from the spirit or scope thereof.

## EXAMPLES

### Example 1

A liquid fill pouch from a five-layer cast coextrusion incorporating a novel peelable sealant blend of the present invention was formed from the following : White LDPE/Tie/EVOH/Tie/Sealant Blend. The sealant blend consists of : 49 wt% ULDPE, 33 wt% EMA, 15 wt% PB and 3 wt% slip concentrate such as Quantum 10571. The tie layers were Mitsui's Admer, a maleic anhydride based polymer.

### Example 2

A dry fill pouch from a three-layer blown coextrusion incorporating a novel peelable sealant blend of the present invention was formed from the following : HDPE/HDPE/Sealant Blend. The sealant blend consists of : 50 wt% ULDPE, 35 wt% EMA, and 15 wt% PB. An alternative blend could contain 47 wt% ULDPE, 35 wt% EMA, 15 wt% PB and 3 wt% slip/antiblock concentrate.

### Example 3

A dry fill pouch from a five-layer blown coextrusion incorporating a novel peelable sealant blend of the present invention was formed from the following : HDPE/Tie/Nylon/Tie/Sealant Blend. The sealant blend consists of : 50 wt% ULDPE, 35 wt% EMA and 15 wt% PB. The tie layers were Du Pont's Plexar, a maleic anhydride based copolymer.

The peelable sealant of each of the pouches exhibited good hot tack strength, low temperature sealability and low static properties as well as low olefin off-odors.

## Claims

1. A sealant blend comprising : polyethylene-based polymer, ethylene-methyl acrylate copolymer and polybutylene ; or, polyethylene-based polymer and polybutylene ; or, ethylene-methyl acrylate copolymer and polybutylene ; or, polyethylene-based polymer and ethylene-methyl acrylate copolymer.

2. The sealant blend of claim 1 wherein the blend comprises : polyethylene-based polymer, ethylene-methyl acrylate copolymer and polybutylene ; or, polyethylene-based polymer and polybutylene ; or polyethylene-based polymer and ethylene-methyl acrylate copolymer ; and wherein said polyethylene-based polymer has a density of from 0.87 to 0.93.

3. The sealant blend of claim 2 wherein the density of the polyethylene-based polymer is 0.912.

4. The sealant blend of claim 2 wherein the polyethylene-based polymer is ultra low density polyethylene.

5. The sealant blend of claim 4 wherein the blend comprises ultra low density polyethylene, ethylene-methyl acrylate copolymer and polybutylene.

6. The sealant blend of claim 1 wherein the blend comprises about 10 to 90 wt% polyethylene-based polymer, about 5 to 75 wt% ethylene-methyl acrylate copolymer, and about 5 to 35 wt% polybutylene.

7. The sealant blend of claim 6 wherein the blend comprises about 30 to 70 wt% polyethylene based polymer, about 20 to 50 wt% ethylene-methyl acrylate copolymer and about 10 to 25 wt% polybutylene.

8. The sealant blend of claim 7 comprising 45 to 55 wt% polyethylene-based polymer, 30 to 40 wt% ethylene-methyl acrylate copolymer, and 10 to 20 wt% polybutylene.

9. The sealant blend of claim 8 wherein the polyethylene-based polymer is ultra low density polyethylene.

10. The sealant blend of claim 1 wherein the blend comprises 65 to 95 wt% ethylene-methyl acrylate copolymer and 5 to 35 wt% polybutylene.

11. The sealant blend of claim 10 additionally containing 0.5 to 20 wt% polyethylene-based polymer.

12. The sealant blend of claim 10 wherein the blend comprises about 75 to about 90 wt% ethylene-methyl acrylate copolymer and about 10 to about 25 wt% polybutylene.

13. The sealant blend of claim 12 wherein the blend contains about 80 to about 90 wt% ethylene-methyl acrylate copolymer and about 10 to about 20 wt% polybutylene.

14. The sealant blend of claim 11 wherein the polyethylene-based polymer is ultra low density polyethylene.

15. The sealant blend according to claim 1 wherein the blend comprises about 65 to about 95 wt% polyethylene-based polymer and about 5 to about 35 wt% polybutylene.

16. The sealant blend according to claim 15 wherein the blend comprises about 75 to about 90 wt% polyethylene-based polymer and about 10 to 25 wt% polybutylene.

17. The sealant blend according to claim 15 where the blend comprises about 80 to about 90 wt% polyethylene-based polymer and about 10 to about 20 wt% polybutylene.

18. The sealant blend according to claim 1 where the blend comprises about 5 to about 95 wt% polyethylene-based polymer and about 5 to about 95 wt% ethylene-methyl acrylate.

19. The sealant blend according to claim 18 wherein the blend comprises about 30 to about 70 wt% polyethylene-based polymer and about 30 to about 70 wt% ethylene-methyl acrylate.

20. The sealant blend according to claim 18 wherein the blend comprises about 45 to 55 wt% polyethylene-based polymer and about 45 to 55 wt% ethylene-methyl acrylate.

21. A film made with the blend of claims 1-20.

22. A multilayer film having as one of its layers the blend of claims 1-20.

23. A package made from a film comprised of the blend of claims 1-20.

24. A package made from a multilayer film wherein one of the layers of said film is comprised of the blend of claims 1-20.